Europäisches Patentamt

European Patent Office

Office européen des brevets

(11) Veröffentlichungsnummer: **0 358 054 B1**

(12) **EUROPÄISCHE PATENTSCHRIFT**

(45) Veröffentlichungstag der Patentschrift: **02.12.92**

(21) Anmeldenummer: **89115613.5**

(22) Anmeldetag: **24.08.89**

(51) Int. Cl.⁵: **F16B** 13/10, F16B 13/12

(54) **Dübel.**

(30) Priorität: **08.09.88 DE 3830560**

(43) Veröffentlichungstag der Anmeldung:
**14.03.90 Patentblatt 90/11**

(45) Bekanntmachung des Hinweises auf die
Patenterteilung:
**02.12.92 Patentblatt 92/49**

(84) Benannte Vertragsstaaten:
**AT BE CH DE ES FR GB IT LI NL**

(56) Entgegenhaltungen:
**BE-A- 795 407**
**DE-A- 2 657 353**
**DE-A- 3 309 006**

(73) Patentinhaber: **"TOGE-DÜBEL" A. Gerhard GmbH**
**Illesheimer Strasse 10**
**W-8500 Nürnberg 80(DE)**

(72) Erfinder: **Wohlwend, Richard J.**
**Heiligkreuz 63**
**FL-9490 Vaduz/Liechtenstein(LI)**

(74) Vertreter: **Rau, Manfred, Dr. Dipl.-Ing.**
**Rau & Schneck, Patentanwälte Königstrasse 2**
**W-8500 Nürnberg 1(DE)**

Rank Xerox (UK) Business Services

**Beschreibung**

Die Erfindung betrifft einen Dübel nach dem Oberbegriff des Anspruches 1.

Derartige, insbesondere in Bohrlöchern in Beton einzusetzende Dübel für mittlere Lasten sind bekannt. Sie weisen ein dickwandiges Spreiz-Rohr auf, an dessen in das Bohrloch einzuführendem Rohrende mehrere, in der Regel vier schlitzartige Öffnungen ausgebildet sind. Das Spreiz-Rohr weist eine sich zum Rohrende hin verjüngende Innenfläche auf. Zum Aufspreizen des Spreiz-Rohres wird ein Spreizkeil in das Spreiz-Rohr eingetrieben, der eine kegelstumpfförmige Spreiz-Fläche aufweist, mittels derer das Rohr aufgespreizt wird.

Die Fertigung insbesondere des Spreiz-Rohres ist verhältnismäßig aufwendig. Darüber hinaus ist bei Rissen im Beton im Bereich des Bohrloches nicht sichergestellt, daß das Spreiz-Rohr ausreichend fest sitzt.

Aus der BE-A 795 407 ist ein Dübel zur Befestigung in Bohrlöchern bekannt, der ein zylindrisches, im Bereich seines Rohrendes mit einer Verzahnung versehenes Spreiz-Rohr aufweist. Das Spreiz-Rohr weist parallel zur Mittel-Längs-Achse verlaufende Schlitze auf, wodurch das ansonsten umlaufend zylindrisch ausgebildete Spreiz-Rohr aus mehreren kreisringsegmentförmigen Rohrabschnitten besteht. Im Spreiz-Rohr ist eine Spreiz-Hülse mit rundum zylindrischer Außenfläche angeordnet, die ebenfalls mit zur Mittel-Längs-Achse parallelen Längsschlitzen versehen ist. In die Spreiz-Hülse greift ein Keil ein, der mit sich entgegen der Richtung zum Rohrende verjüngenden Keilflächen versehen ist. Der Keil stützt sich mittels einer Platte an der Stirnseite des Rohrendes ab. Der Keil ist relativ zum Spreiz-Rohr unverschiebbar. Durch Eintreiben der Spreiz-Hülse in das Spreiz-Rohr in Richtung zum Rohrende hin schiebt sich die Spreiz-Hülse auf den Keil, wodurch die Segmente der Spreiz-Hülse auseinandergedrückt werden, die wiederum die Rohrabschnitte des Spreiz-Rohres auseinanderdrücken. Bei diesem Dübel ist nur ein einfaches Auseinanderspreizen der segmentförmigen Rohrabschnitte möglich.

Der Erfindung liegt die Aufgabe zugrunde, einen Dübel der gattungsgemäßen Art zu schaffen, der bei einfachem Aufbau eine sehr hohe Auszugsfestigkeit und insbesondere eine hohe Sicherheit gegen Lösen bei Rissen im Bereich des Bohrloches bietet.

Diese Aufgabe wird erfindungsgemäß durch die Merkmale im Kennzeichnungsteil des Anspruches 1 gelöst. Der Kern der Erfindung liegt darin, daß der Spreizkeil einerseits das Spreizrohr aufspreizt und im Bohrloch festlegt. Der Spreizkeil selber wiederum wird durch den Gegenkeil aufgespreizt und schneidet sich in den Beton ein. Der Spreizkeil hat also einen vom Spreiz-Rohr unabhängigen festen Sitz im Bohrloch. Wenn Risse im Bohrlochbereich auftreten sollten, dann kann das Rohr nachspreizen, da der Spreizkeil selber wiederum im Beton verkeilt ist. Auch bei Rissen im Beton ist also ein extrem hohes Maß an Sicherheit gegeben. Die vorteilhaften Einzelheiten des erfindungsgemäßen Dübels ergeben sich aus den Unteransprüchen und der nachfolgenden Beschreibung eines Ausführungsbeispiels anhand der Zeichnung. Es zeigt

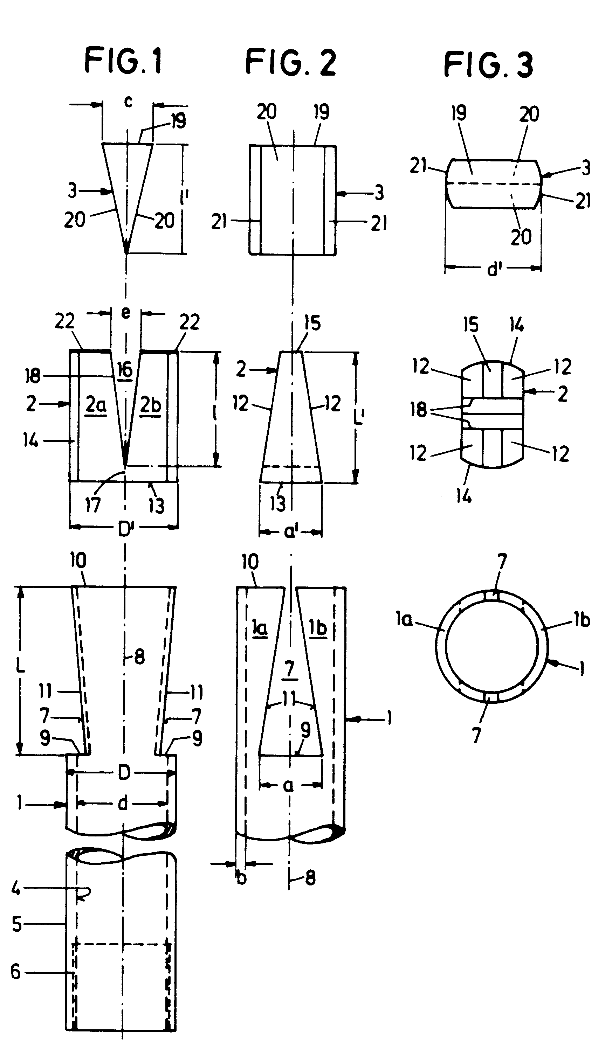

Fig. 1 einen Dübel gemäß der Erfindung in Längsansicht in Explosionsdarstellung,

Fig. 2 den Dübel in einer um 90° gegenüber Fig. 1 gedrehten Längsansicht in Explosionsdarstellung,

Fig. 3 die Teile des Dübels in Draufsicht in einer Explosionsdarstellung,

Fig. 4 den Dübel in einer Fig. 1 entsprechenden Längsansicht in montiertem noch ungespreiztem Zustand,

Fig. 5 den Dübel in einer Fig. 2 entsprechenden Längsansicht in montiertem noch unverspreiztem Zustand,

Fig. 6 den Dübel in montiertem noch unverspreiztem Zustand in Draufsicht und

Fig. 7 den Dübel in verspreiztem Zustand.

Der in der Zeichnung dargestellte Dübel besteht aus einem Spreiz-Rohr 1, einem Spreizkeil 2 und einem Gegenkeil 3.

Das Spreiz-Rohr 1 ist durchgehend ringzylindrisch ausgebildet, weist also eine zylindrische Innenfläche 4 und eine zylindrische Außenfläche 5 auf. An seinem nach der Montage in einem Bohrloch im Bereich von dessen Außenrand liegenden Ende sind Einrichtungen zur Befestigung von Lasten, beispielsweise ein Innengewinde 6 vorgesehen, in das zur Befestigung einer Last ein Gewindebolzen eingeschraubt werden kann.

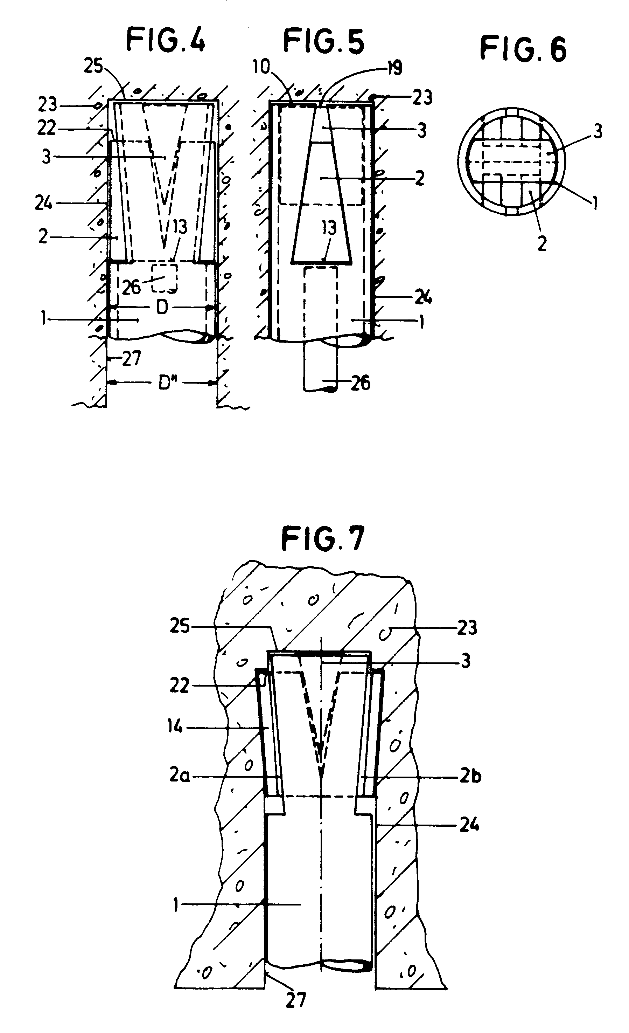

Am entgegengesetzten Spreizende ist das Spreiz-Rohr 1 mit zwei einander diametral gegenüberliegenden - in der Längsdraufsicht etwa trapezförmigen - Spreizöffnungen 7 versehen. Diese Spreizöffnungen 7 weisen eine quer zur Mittel-Längs-Achse 8 verlaufende untere Anlagefläche 9 auf, an der die Spreizöffnung 7 ihre größte Breite a aufweist. Am zugeordneten Rohrende 10 weist die Spreizöffnung 7 eine Breite auf, die sehr gering sein kann und primär durch fertigungstechnische Vorgaben bestimmt ist. Zwischen der Anlagefläche 9 und dem Rohrende 10 erstrecken sich die zum Rohrende 10 hin aufeinander zu geneigten, als Spreizflächen 11 dienenden Seitenflächen der Spreizöffnung 7. Beide Spreizöffnungen 7 sind - in der Draufsicht - spiegelsymmetrisch zur Achse 8 ausgebildet, wie insbesondere Fig. 2 zu entnehmen ist. Das Spreiz-Rohr 1 weist einen Innendurchmesser d und eine Außendurchmesser D auf, so daß für die Wanddicke b des Spreiz-Rohres 1 gilt D - d = 2b.

Der Spreizkeil weist zwei Keilflächen 12 auf, die - wie insbesondere Fig. 2 entnehmbar ist - zur Mittel-Längs-Achse 8 hin geneigt sind. Am breiteren Ende des Keils sind diese Keilflächen 12 durch eine Auflagefläche 13 miteinander verbunden, deren Breite a' etwa der Breite a der Anlagefläche 9 entspricht und zwar abzüglich eines geringen Spiels von maximal einigen zehntel Millimetern. Die Neigung der Keilfächen 12 zur Achse 8 ist gleich der Neigung der Spreizflächen 11 zur Achse 8. Etwa quer zu den Keilflächen 12 verlaufend weist der Spreizkeil 2 zwei Teil-Zylinderflächen 14 auf, die konzentrisch zur Achse 8 ausgebildet sind und deren Durchmesser D' etwa dem Außendurchmesser D des Spreiz-Rohres 1 ist. Aus dem Vorstehenden ergibt sich, daß der Spreizkeil 2 seitlich in die Spreizöffnungen 7 des Spreiz-Rohres 1 eingeschoben werden kann, wobei die Auflagefläche 13 auf der Anlagefläche 9 aufliegt und wobei die Keilflächen 12 gegen die Spreizflächen 11 anliegen. Dies ist insbesondere aus Fig. 5 ersichtlich. Hieraus ist auch erkennbar, daß die axiale Länge L der Spreizöffnungen 7 deutlich größer ist als die axiale Länge L' des Spreizkeils, so daß die der Auflagefläche 13 in Achsrichtung gegenüberliegende kleine Fläche 15 bei ungespreiztem Spreiz-Rohr 1 einen deutlichen Abstand vom Rohrende 10 hat. Für das Verhältnis von L und L' gilt:

o,5 L = L' = o,9 L.

In dem Spreizkeil 2 ist - ausgehend von der kleinen Fläche 15 - eine Keilöffnung 16 ausgebildet, die sich axial über eine Länge 1 erstreckt, die etwas kleiner ist als die Länge L' des Spreizkeils 2. Für das Verhältnis dieser Längen zueinander gilt, o,9 L' = 1. Hieraus ergibt sich, daß zwischen der Keilöffnung 16 und der Auflagefläche 13 des Spreizkeils 2 nur ein Steg 17 geringer axialer Erstreckung verbleibt, so daß der Spreizkeil 2 aufbiegbar ist. Der Steg 17 hat also die Funktion einer Aufbiegeverbindung zwischen den beiden durch die Keilöffnung 16 weitgehend voneinander getrennten Spreizkeilhälften 2a und 2b. Die Keilöffnung 16 wird begrenzt durch zwei unter gleicher Neigung zur Achse 8 verlaufende Druckflächen 18, die in Richtung auf die Auflägefläche 13 aufeinander zu verlaufen. In die Keilöffnung 16 ist bei bereits in das SpreizRohr 1 seitlich eingeschobenem Spreizkeil 2 der Gegenkeil 3 vom Rohrende 10 her eingeschoben, wobei seine als Widerlagerfläche 19 dienende quer zur Achse 8 verlaufende große Fläche mit dem Rohrende 10 bündig liegt. Der Gegenkeil 3 wird im wesentlichen durch zwei zur Mittel-Längs-Achse hin geneigt; Keilflächen 20 begrenzt, die sich schneiden. Quer zu diesen Keilflächen 20 wird er durch zwei Zylinder-Teilflächen 21 begrenzt, wie aus Fig. 3 hervorgeht. Der Durchmesser d' dieser Zylinder-Teilflächen 21 entspricht etwa dem Innendurchmesser d des Spreiz-Rohres 1 abzüglich eines geringen fertigungstechnischen Spiels von höchstens einigen zehntel Millimetern. Diese Zylinder-Teilflächen 21 liegen also bei montiertem Gegenkeil 3 etwa an der zylindrischen Innenfläche 4 des Spreiz-Rohres 1 an. Die Breite c der Widerlagerfläche 19 ist größer als die Breite e der Keilöffnung 16 des Spreizkeils 2 in ungespreiztem Zustand. Die Neigung der Keilflächen 20 des Gegenkeils 3 zur Achse 8 ist größer als die Neigung der Druckflächen 18 der Keilöffnung 16 des Spreizkeils 2. Die Neigungen und die Breiten c und e sind so gewählt, daß in ungespreiztem Zustand die Widerlagerfläche 19 des Gegenkeils 3 sich in der Ebene des Rohrendes befindet, wobei der Gegenkeil 3 lose in die Keilöffnung 16 eingesetzt ist, wie den Figuren 4 und 5 entnehmbar ist. Die Länge 1' des Gegenkeils kann etwa gleich der Länge 1 der Keilöffnung 16 des Spreizkeils 2 sein. In der Regel wird sie aber etwas kleiner sein.

Die kreisabschnittsförmigen Seitenkanten zwischen den Teil-Zylinderflächen 14 und der kleinen Fläche 15 des Spreizkeils 2 dienen als Schneidkanten 22 und sind deshalb gehärtet. Das Spreiz-Rohr 1, der Spreizkeil 2 und der Gegenkeil 3 bestehen aus Metall, wobei insbesondere der Spreizkeil 2 und der Gegenkeil 3 aus relativ hartem Metall bestehen, wobei wiederum aus den genannten Gründen zumindest der Spreizkeil 2 aus einem härtbaren Stahl besteht.

Der in den in Figuren 4 bis 6 in zusammengebautem Zustand dargestellte Dübel wird bevorzugt in Beton eingesetzt. Hierzu ist im Beton 23 ein in den Figuren 4 und 5 angedeutetes Bohrloch 24 angebracht, dessen Durchmesser D" geringfügig größer ist als der Außendurchmesser D des Spreiz-Rohres 1 und dementsprechend als der Durchmesser D' des Spreizkeils 2. Das Rohrende 10 des Spreiz-Rohres 1 und die Widerlagerflächen 19 des Gegenkeils 3 liegen am Grund 25 des Bohrlochs 24 an. Nunmehr wird ein im wesentlichen aus einer Stange bestehendes Einschlagwerkzeug 26 von außen durch das Spreiz-Rohr 1 eingeführt und gegen die Anlagefläche 9 des Spreizkeils 2 angelegt und letzterer dann mittels Hammerschlägen auf das Einschlagwerkzeug 26 in Richtung zum Rohrende 10 vorgetrieben. Da das Spreiz-Rohr 1 mit seinem Rohrende 10 am Grund 25 des Bohrlochs 24 festliegt, drücken die Keilflächen 12 die Spreizflächen 11 des Rohres radial auseinander, wodurch wiederum die durch die Spreizöffnungen 7 voneinander getrennten Rohrabschnitte 1a und 1b radial auseinander in die Wand 27 des Bohrlochs 24 gedrückt werden.

Da der Gegenkeil 3 mit seiner Widerlagerfläche 19 gegen den Grund 25 des Bohrlochs 24 anliegt, kann dieser ebenfalls nicht ausweichen und spreizt mit seinen Keilflächen 20 die Druckflächen 18 des Spreizkeils 2 auseinander, wodurch die Spreizkeilhälften 2a und 2b auseinandergedrückt werden. Hierbei werden die Schneidkanten 22 am stärksten radial nach außen gedrückt und schneiden sich in die Wand 27 des Bohrlochs 24 ein. Die Teil-Zylinderflächen 14 des Spreizkeils 2 verlaufen jetzt nicht mehr parallel zur Achse 8 und damit zur Wand 27 des Bohrlochs 24; sie verlaufen vielmehr vom Grund 25 des Bohrlochs 24 weg zur Achse hin geneigt, da der radiale Abstand der Schneidkanten 22 voneinander größer als der Durchmesser $D''$ des Bohrlochs 24 ist. Die Teil-Zylinderflächen 14 des Spreizkeils 2 sind also zu Keilflächen geworden, die sich in die Wand 27 des Bohrlochs 24 eingearbeitet haben.

Das Spreiz-Rohr 1 einerseits und der Spreizkeil 2 andererseits sind also konisch verspreizt. Wenn das zylindrische Bohrloch 24 durch einen Riß geringfügig erweitert werden sollte, dann bleibt entweder der Spreizkeil 2 stehen oder bewegt sich geringfügig, wodurch dann wiederum die Rohr-Abschnitte 1a und 1b nachgespreizt würden. Der Sitz des Dübels ist auf jeden Fall besonders gut, weil der Spreizkeil 2 einen vom Spreiz-Rohr 1 unabhängigen festen Sitz im Bohrloch hat.

Die Neigung der Spreizflächen 11, der Keilflächen 12, der Druckflächen 18 der Keilflächen 20 gegenüber einer parallelen zur Achse 8 ist im Bereich von etwa 7°, wobei die Neigung der Keilflächen 20 etwas größer sein kann als die der Druckflächen 18. Für die Beziehung von d zu D gilt 0,65 d/d 0,75. Bevorzugt gilt d/D = 0,7 damit ist auch ein Maß für die Wanddicke b des Spreiz-Rohres 1 gegeben.

**Patentansprüche**

1. Dübel, insbesondere zur Befestigung in Bohrlöchern (24) in Beton (23), bestehend aus einem Spreiz-Rohr (1) und einem in diesem angeordneten Spreizkeil (2), wobei das Spreiz-Rohr (1) im Bereich seines in ein Bohrloch (24) einzuführenden Rohrendes (10) mit parallel zu seiner Mittel-Längs-Achse (8) verlaufenden, Rohrabschnitte (1a, 1b) begrenzenden Öffnungen (Spreizöffnungen 7) versehen ist und wobei am Spreiz-Rohr (1) Spreizflächen (11) und am Spreizkeil (2) Keilflächen (12) ausgebildet sind, die aneinander anliegen und durch eine axiale Verschiebung des Spreizkeils (2) relativ zum Spreiz-Rohr (1) in Richtung auf das Rohrende (10) hin ein Aufspreizen der Rohrabschnitte (1a, 1b) bewirken, dadurch gekennzeichnet, daß der Spreizkeil (2) mit seinen zum Rohrende (10) aufeinanderzu geneigten Keilflächen (12) an die als Spreizöffnungen (7) dienenden Öffnungen des Spreiz-Rohres (1) begrenzenden, ebenfalls zum Rohrende (10) aufeinanderzu geneigten Spreizflächen (11) anliegt und in den Spreizöffnungen (7) angeordnet ist, und daß der Spreizkeil (2) eine zum Rohrende (10) hin offene und sich dorthin erweiternde Keilöffnung (16) aufweist, in der ein den Spreizkeil (2) radial zur Mittel-Längs-Achse (8) aus den Spreizöffnungen (7) über die Außenfläche (5) des Spreiz-Rohres (1) hinaus spreizender Gegenkeil (3) mit entgegen der Richtung zum Rohrende (10) aufeinanderzu geneigten Keilflächen (20) angeordnet ist.

2. Dübel nach Anspruch 1, dadurch gekennzeichnet, daß der Spreizkeil (2) in dem aus den Spreizöffnungen (7) hinauszuspreizenden Bereich mit Schneidkanten (22) versehen ist.

3. Dübel nach Anspruch 1, dadurch gekennzeichnet, daß der Spreizkeil (2) durch die Keilöffnung (16) in zwei nur durch einen verformbaren Steg miteinander verbundene Spreizkeilhälften (2a, 2b) geteilt ist.

4. Dübel nach Anspruch 1, dadurch gekennzeichnet, daß der Spreizkeil (2) in den Spreizöffnungen (7) durch Teil-Zylinderflächen (14) begrenzt ist.

5. Dübel nach Anspruch 2 und 4, dadurch gekennzeichnet, daß die Schneidkanten (22) an den zum Rohrende (10) hin gelegenen Enden der Teil-Zylinderflächen (14) ausgebildet sind.

6. Dübel nach Anspruch 1, dadurch gekennzeichnet, daß in unverspreiztem Zustand des Dübels der Spreizkeil (2) mit einer breiten Anlagefläche (13) an einer angepaßten Auflagefläche (9) der jeweiligen Spreizöffnung (7) anliegt, daß der Gegenkeil (3) mit einer breiten, als Widerlagerfläche (19) dienenden Fläche etwa bündig mit dem Rohrende (10) angeordnet ist und daß der Gegenkeil (3) etwa spielfrei in der Keilöffnung (16) des Spreizkeils (2) sitzt.

7. Dübel nach Anspruch 1, dadurch gekennzeichnet, daß die Spreizöffnungen (7) etwa trapezförmig ausgebildet sind und sich zum Rohrende (10) hin verjüngen.

8. Dübel nach Anspruch 1, dadurch gekennzeichnet, daß die Keilöffnung (16) quer zu den Spreizöffnungen (7) angeordnet ist.

9. Dübel nach Anspruch 1, dadurch gekennzeichnet, daß der Gegenkeil (3) an der Innenfläche (4) des Spreiz-Rohres (1) geführt ist.

10. Dübel nach Anspruch 1, dadurch gekennzeichnet, daß das Spreiz-Rohr (1) eine durchgehende zylindrische Außenfläche (5) und eine durchgehende zylindrische Innenfläche (4) aufweist.

**Claims**

1. Dowel, in particular for fastening in bore holes (24) in concrete (23), comprising an expanding tube (1) and an expanding wedge (2) arranged in the latter, the expanding tube (1), in the vicinity of its tube end (10) to be introduced into a bore hole (24), being provided with openings (expanding openings 7) extending parallel to its central longitudinal axis (8) and defining tube sections (1a, 1b), and expanding surfaces (11) being formed on the expanding tube (1) and wedge surfaces (12) being formed on the expanding wedge (2), which surfaces rest one against the other and which cause expansion of the tube sections (1a, 1b) due to axial displacement of the expanding wedge (2) referred to the expanding tube (1) in the direction towards the tube end (10), characterized in that the expanding wedge (2), with its wedge surfaces (12) inclined towards each other in the direction towards the tube end (10), bears against expanding surfaces (11) equally inclined towards each other in the direction of the tube end (10) and defining the openings of the expanding tube (1) which serve as expanding openings (7) and is arranged in the expanding openings (7), and in that the expanding wedge (2) has a wedge recess (16) widening and open towards the tube end (10) and in which a counter-wedge (3), with wedge surfaces (20) inclined towards each other against the direction of the tube end (10), is arranged expanding the expanding wedge (2) radially to the central longitudinal axis (8) out of the expanding openings (7) beyond the external surface (5) of the expanding tube (1).

2. Dowel according to claim 1, characterized in that the expanding wedge (2) is provided with cutting edges (22) in the portion to be expanded out of the expanding openings (7).

3. Dowel according to claim 1, characterized in that the expanding wedge (2) is divided by the wedge recess (16) into two expanding-wedge halves (2a, 2b) connected with each other only by a deformable web.

4. Dowel according to claim 1, characterized in that, in the expanding openings (7), the expanding wedge (2) is defined by partial cylindrical surfaces (14).

5. Dowel according to claim 2 and 4, characterized in that the cutting edges (22) are formed at the ends of the partial cylindrical surfaces (14) located towards the tube end (10).

6. Dowel according to claim 1, characterized in that, with the dowel in its non-expanded condition, the expanding wedge (2) bears with a wide bearing surface (13) against an adapted contact surface (9) of the respective expanding opening (7), in that the counter-wedge (3) with a wide surface serving as an abutment surface (19) is about flush with the tube end (10), and in that the counter-wedge (3) is placed approximately without play in the wedge recess (16) of the expanding wedge (2).

7. Dowel according to claim 1, characterized in that the expanding openings (7) are about trapezoidal and taper towards the tube end (10).

8. Dowel according to claim 1, characterized in that the wedge recess (16) is arranged at right angles to the expanding openings (7).

9. Dowel according to claim 1, characterized in that the counter-wedge (3) is guided on the internal surface (4) of the expanding tube (1).

10. Dowel according to claim 1, characterized in that the expanding tube (1) has a continuous cylindrical external surface (5) and a continuous cylindrical internal surface (4).

**Revendications**

1. Cheville notamment destinée à la fixation dans des trous de perçage (24) dans le béton (23), composée d'un tube expansible (1) et d'un coin d'expansion (2) disposé dans ce tube, le tube expansible (1) étant pourvu, dans la zone de son extrémité de tube (10) devant être engagée dans un trou de perçage (24), d'ouvertures (ouvertures d'expansion 7) s'étendant parallèlement à son axe longitudinal central (8) et délimitant des tronçons de tube (1a, 1b), des surfaces d'expansion (11) étant formées sur le tube expansible (1) et des surfaces en coin (12) étant formées sur le coin d'expansion (2), ces surfaces s'appuyant les unes sur les autres et produisant une expansion par écartement des tronçons de tube (1a, 1b), grâce à un déplacement axial du coin d'expansion (2) par rapport au tube expansible (1), en direction de l'extrémité de tube (10), caractérisée en ce que le coin d'expansion (2) est disposé dans les ouvertures d'expansion (7) et s'appuie avec ses surfaces en coin (12) inclinées l'une vers l'autre en direction de l'extrémité de tube (10), contre les surfaces d'expansion (11) également inclinées l'une vers l'autre en direction de l'extrémité de tube (10) et délimitant les ouvertures faisant office d'ouvertures d'expansion (7) du tube expansible (1), et en ce que le coin d'expansion (2) comporte une ouverture en coin (16) s'ouvrant en direction de l'extrémité de tube (10) et s'évasant vers celle-ci, dans laquelle est disposé un coin conjugué (3) présentant des surfaces en coin (20) inclinées l'une vers l'autre à l'encontre de la direction orientée vers l'extrémité de tube (10), et réalisant une expansion du coin d'expansion (2), radialement à l'axe longitudinal central (8), hors des ouvertures d'expansion (7), au-delà de la surface extérieure (5) du tube expansible (1).

2. Cheville selon la revendication 1, caractérisée en ce que le coin d'expansion (2) est muni d'arêtes de coupe (22), dans la zone s'écartant par expansion, hors des ouvertures d'expansion (7).

3. Cheville selon la revendication 1, caractérisée en ce que le coin d'expansion (2) est divisé par l'ouverture en coin (16) en deux moitiés de coin d'expansion (2a, 2b) reliées entre-elles uniquement par une nervure déformable.

4. Cheville selon la revendication 1, caractérisée en ce que le coin d'expansion (2) est délimité dans les ouvertures d'expansion (7), par des surfaces en forme de secteur de cylindre (14).

5. Cheville selon les revendications 2 et 4, caractérisée en ce que les arêtes de coupe (22) sont réalisées aux extrémités dirigées vers l'extrémité de tube (10), des surfaces en forme de secteur de cylindre (14).

6. Cheville selon la revendication 1, caractérisée en ce que dans l'état dans lequel elle n'a pas encore subi l'expansion, le coin d'expansion (2) s'applique par une surface d'appui large (13) contre une surface de support adaptée (9) de chaque ouverture d'expansion (7), en ce que le coin conjugué (3) est disposé de manière à affleurer approximativement l'extrémité de tube (10), avec une surface large et faisant office de surface de butée (19), et en ce que le coin conjugué (3) est logé sensiblement sans jeu dans l'ouverture en coin (16) du coin d'expansion (2).

7. Cheville selon la revendication 1, caractérisée en ce que les ouvertures d'expansion (7) présentent une forme sensiblement trapézoïdale et se rétrécissent en direction de l'extrémité de tube (10).

8. Cheville selon la revendication 1, caractérisée en ce que l'ouverture en coin (16) est agencée transversalement par rapport aux ouvertures d'expansion (7).

9. Cheville selon la revendication 1, caractérisée en ce que le coin conjugué (3) est guidé sur la surface intérieure (4) du tube expansible (1).

10. Cheville selon la revendication 1, caractérisée en ce que le tube expansible (1) présente une surface extérieure cylindrique (5) continue, et une surface intérieure cylindrique (4) continue.

# FIG.1

# FIG. 2

# FIG. 3

FIG.4     FIG.5     FIG.6

FIG.7